# EUROPEAN PATENT APPLICATION

(11) **EP 4 542 170 A1**
(43) Date of publication of application: **23.04.2025**
(21) Application number: 23205014.6
(22) Date of filing: 20.10.2023
(51) Int. Cl.: G01B 17/00, G01B 21/04

(54) **METHOD OF CALIBRATING AN ULTRASONIC MEASUREMENT DEVICE**

(71) Applicant: R&D Engineering A/S, 8382 Hinnerup (DK)
(72) Inventor: NIELSEN, Flemming Selmer, 8382 Hinnerup (DK); STOKBÆK, Jesper, 8382 Hinnerup (DK); NYBO, Jens Vestergaard, 8382 Hinnerup (DK)
(74) Representative: Meissner Bolte Partnerschaft mbB

(57) **Abstract**

The present invention relates to A method of calibrating an ultrasonic measurement device, particularly an ultrasonic bolt testing device, comprising the following steps: a) providing a reference object; b) measuring the reference object via an ultrasonic measurement device to determine reference-measurement-data representative of the ultrasonic length of the reference object; c) storing the reference-measurement-data; d) measuring the reference object with the same, or another, ultrasonic measurement device to determine verification-measurement-data representative of the ultrasonic length of the reference object; e) comparing a reference length of the reference object determined on the basis of the reference-measurement-data to a verification length of the reference object determined on the basis of the verification-measurement-data; f) adjusting the ultrasonic measurement device on the basis of a comparison result between the reference-measurement-data and the verification-measurement-data.

## Description

The present invention relates to a method of calibrating an ultrasonic measurement device, particularly but not exclusively to a method of calibrating an ultrasonic bolt-testing device. Another aspect of the present invention concerns an ultrasonic measurement device for determining an ultrasonic length of an object, preferably but not exclusively a bolt.

With the increase in size and number of wind turbines globally, the requirements for critical loads being transferred via bolted connections is ever increasing. This increase in transfer loads requires the bolted joints to be installed very accurately, that is, at the right level of clamping force and at fully mated flanges. The force creates friction between the clamping surfaces, preventing them from sliding. If the required clamping force is not obtained, the surfaces may slide, causing unwanted loads on the bolted joint. This can ultimately lead to the fail of the bolted joint and eventually to the entire connection. To ensure the correct clamping force, highly accurate tools, such as torque wrenches, have been developed. Although torque wrenches are very precise in applying the required torque, the resulting clamping force is strongly affected by friction and relaxation.

Friction and relaxation depend on factors such as lubricants, materials, surface treatment, geometry, and production tolerances. Even if the same forces are applied to identical bolts, the resulting clamping forces will vary. Theoretically, the variation is up to ± 30%, but in reality as much as 70% variation has been determined.

In order to avoid large variances, ultrasonic measurement devices have been developed that determine the clamping load accurately. Such ultrasonic measurement devices measure the elongation of each bolt after tightening has been completed. The elongation is a direct measurement of the clamping force and is not affected by any tightening factors. Such ultrasonic measurement devices can be used either for verification after tension or during the tensioning process.

Although the aforementioned ultrasonic measurement devices may determine the elongation of the bolt very accurately, measurement results of ultrasonic measurement devices may vary during the lifetime of the device, e.g., due to wear. Furthermore, measurements with different hardware may result in measurement deviations. To ensure that the ultrasonic measurement devices provide accurate and comparable readings throughout their lifetime, re-calibration is required on a regular basis.

Calibration is normally conducted by using a reference/calibration rod, where the operator must manually type in the specifications for the rod, in order to obtain comparable calibrations.

Using such known methods for re-calibration, the operator is required to enter/choose a variety of different parameters of the calibration rod, such as the sound velocity within the calibration rod and its physical length. Such calibration rod parameters are typically provided in a data sheet of the calibration rod, among several other (now irrelevant for the calibration) characteristics of the rod. It follows that the operator may very easily enter the wrong parameters, thereby potentially affecting the re-calibration and risking inaccurate measurement results going forward.

The present invention tries to solve or at least ameliorate one or more of the aforementioned problems. In particular, it is an object of the present invention to provide a method of calibrating an ultrasonic measurement device that is simple and reliable. Another object of the present invention is to move the burden of data entry from the operator to the device manufacturer, to avoid unnecessary errors.

The aforementioned object of the present invention is solved by the method of independent claim 1 and the ultrasonic measurement device of independent claim 15. Further embodiments are disclosed in the appended, dependent claims.

According to a first aspect of the present invention, there is provided a method of calibrating an ultrasonic measurement device, particularly an ultrasonic bolt-testing device, comprising the following steps:
a) providing a reference object;
b) measuring the reference object via an ultrasonic measurement device to determine reference-measurement-data representative of the ultrasonic length of the reference object;
c) storing the reference-measurement-data;
d) measuring the reference object with the same, or another, ultrasonic measurement device to determine verification-measurement-data representative of the ultrasonic length of the reference object;
e) comparing a reference length of the reference object determined on the basis of the reference-measurement-data to a verification length of the reference object determined on the basis of the verification-measurement-data;
f) adjusting the ultrasonic measurement device on the basis of a comparison result between the reference-measurement-data and the verification-measurement-data.

According to the present invention, the reference object is measured to produce reference-measurement-data representative of the ultrasonic length of the reference object and to produce verification-measurement-data at a later point in time. The original measurement, i.e., the determination of the reference-measurement-data is preferably determined by the manufacturer and stored in a database for future use. The reference-measurement-data may for example be stored in a memory of the ultrasonic measurement device. Alternatively, the reference-measurement-data may be stored in a centralized server or cloud database. The calibration method of the present invention suggests comparing the initial reference-measurement-data produced by the manufacturer to verification-measurement-data taken by the operator. As will be explained in more detail below, this setup does not require the user to enter parameters of the reference object, e.g., a calibration rod, into the measurement device. Rather, such parameters are only entered by the manufacturer when determining the reference-measurement-data. In the field, the operator uses the same measurement device to measure the same reference object. A processor (e.g., a processor of the ultrasonic measurement device) compares the so determined verification-measurement-data with the original reference-measurement-data to determine if the dimensions of the reference object are still measured at the same value, i.e., the same length. In one example, the method may require adjusting the ultrasonic measurement device, i.e., recalibrating the measurement device, if the verification measurement differs from the reference measurement.

According to another embodiment, the method comprises assigning a reference ID to the reference object and a device ID to the measurement device and storing the reference-measurement-data together with the corresponding reference ID and device in a database, preferably in a memory of the measurement device. As will be appreciated, each reference object, e.g., each calibration rod, may have slightly different dimensions. Similarly, each ultrasonic measurement device will return different ultrasonic lengths of the same reference object. Accordingly, reference-measurement-data is only accurate for a specific combination of reference object and ultrasonic measurement device. This embodiment suggests storing the identity of the reference object via a reference ID and the identity of the ultrasonic measurement device used to create the reference-measurement-data in a database, together with the reference-measurement-data. In other words, the reference-measurement-data is tagged with the reference ID of the reference object and the device ID of the ultrasonic measurement device used to create the reference-measurement-data. The database may include a number different reference-measurement-data. One for each reference object. The process may thus include retrieving the required measurement data based on the reference ID of the reference object and the device ID of the measurement device used by the operator in the field.

In another embodiment, step e) comprises:
e1) determining a reference ID of the reference object;
e2) determining a device ID of the measurement device;
e3) determining the reference length on the basis of reference-measurement-data corresponding to the combination of reference ID and device ID.

The reference ID and the device ID may be marked on the corresponding objects/devices, either as a serial number or barcode/QR code. In other embodiments, the device ID of the measurement device may be stored in a memory of the measurement device. Similarly, the reference ID of the reference object may be electronically accessible via the ultrasonic measurement device. In particular, the ultrasonic measurement device may include communication means, for communicating with the reference object, i.e., via RFID tags mounted on the reference object. In this way, the ultrasonic measurement device may interrogate the reference object to determine the reference ID, which may then be provided to a processor of the measurement device. The processor of the measurement device may use both the so determined reference ID and the device ID, which may be stored within the measurement device's memory, to look-up the corresponding reference-measurement-data corresponding to the combination of reference ID and device ID.

According to another embodiment, the method uses a single reference object for all verification measurements, irrespective of the size of a bolted connection to be checked via the ultrasonic measurement device. The method of the present invention does not require the use of reference objects that have a similar length to the bolt to be measured. Rather, a single reference object of any length may be used to perform the verification measurement, irrespective of the nominal length of the bolt to be checked.

According to another embodiment, measuring the reference object comprises determining a time of flight of an ultrasound signal between a pre-set measurement origin and a point in time when an ultrasound return signal is received. In this regard, it should be noted that the ultrasonic length of the object to be measured is not necessarily the time that has lapsed since the creation of the ultrasonic signal by the transducer and the receipt of the return signal. Rather, correction factors will have to be applied that take into consideration the time required for the ultrasound signal to propagate from the transducer, e.g. via a couplant, into the material of the reference object. This time delay will be used to determine the measurement origin, i.e., typically a point in time that is shortly after the generation of the ultrasonic signal by the transducer.

According to another embodiment, adjusting the ultrasonic measurement device comprises shifting the measurement origin on the basis of the comparison result between the reference-measurement-data and the verification-measurement-data. In other words, any discrepancy between the ultrasonic length determined on the basis of the reference-measurement-data and the ultrasonic length determined on the basis of the verification-measurement-data may be used to shift the measurement origin to re-calibrate (adjust) the ultrasonic measurement device. This re-calibration method is based on the concept that a specific pairing of ultrasonic measurement device and reference object should always return the same measurement-data. A discrepancy between the two is typically due to wear of one or more parts of the measurement device, such as the transducer, and may be compensated by shifting the measurement origin.

According to another embodiment, the measurement origin is shifted on the basis of a difference in length determined by multiplying the comparison result with a constant correction factor. The correction factor may be a function of the speed of sound within the material of the reference object.

According to another embodiment, comparing the lengths comprises determining a length difference between the length determined on the basis of the reference-measurement-data and the length of the reference object determined on the basis of the calibration-measurement-data, wherein the method comprises comparing the length difference to a calibration threshold. In other words, the method may include a step for verification if re-calibration is required. To this end, the method may only re-calibrate the measurement device, if the calibration threshold is exceeded.

The calibration threshold may be between ± 0.00 mm and ± 0.02 mm.

According to another embodiment, the method comprises repeating steps d) to f) until the length difference is below the calibration threshold. That is, if the calibration threshold is exceeded, the method includes adjusting (re-calibrating) the ultrasonic measurement device to compensate for the length difference between the reference-measurement and the verification measurement. The method will then return to step d) to, once again, provide a verification measurement with the adjusted settings of the ultrasonic measurement device. This new verification-measurement-data will then be compared to the original reference-measurement-data to determine if the difference between the reference-measurement-data and the verification-measurement-data is now below the calibration threshold. Once it is determined that the length difference is within the aforementioned calibration threshold, a status signal may be provided to the user, informing them that the ultrasonic measurement device is now recalibrated and ready to use. In some embodiments, the re-calibration process may be logged in a memory together with the device ID of the ultrasonic measurement device used.

In another embodiment, reference-measurement-data comprises any one or more of:
- a waveform of ultrasonic signal determined during the reference measurement;
- a length of the reference object determined during the reference measurement;
- a time of flight of the ultrasound signal during the reference measurement.

In another embodiment, the verification-measurement-data comprises any one or more of:
- a waveform of ultrasonic signal determined during the verification measurement;
- a length of the reference object determined during the verification measurement;
- a time of flight of the ultrasound signal during the verification measurement.

In another embodiment, the method comprises logging when the ultrasonic measurement device was last verified and/or calibrated. This information may be logged together with the device ID in a local or remote database. In some embodiments, this timestamp may be used to remind the operator to verify/recalibrate the ultrasonic measurement device on a regular basis.

According to another aspect of the present invention, there is provided an ultrasonic measurement device for determining an ultrasonic length of an object, preferably a bolt, comprising:
- an ultrasonic transducer;
- an ultrasonic receiver;
- a memory for storing measurement data;
- a controller configured to:
   a) receive reference-measurement-data representative of the ultrasonic length of the reference object recorded during a first measurement of the reference object;
   b) store the reference-measurement-data in the memory;
   c) receive verification-measurement-data representative of the ultrasonic length of the reference object recorded during a later, second measurement of the reference object;
   d) comparing a reference length of the reference object determined on the basis of the reference-measurement-data to a verification length of the reference object determined on the basis of the verification-measurement-data;
   e) adjust the ultrasonic measurement device on the basis of a comparison result between the reference-measurement-data and the verification-measurement-data.

The invention shall now be described in more detail with reference to the exemplary embodiments shown in the attached drawings, in which:
- FIG. 1: is a schematic representation of an ultrasonic measurement device connected to a bolt;
- FIG. 2: is a schematic view of a range of ultrasonic measurement devices and reference objects together with a corresponding database;
- FIG. 3: is a schematic graph showing an ultrasonic signal that may be detected by an ultrasonic measurement device;
- FIG. 4: shows a schematic view of a comparison of reference-measurementdata and verification-measurement-data in accordance with the present method;
- FIG. 5: is a schematic graph representing the calibration of an ultrasonic measurement device;
- FIG. 6: is a schematic flow-chart of a method for calibrating an ultrasonic measurement device according to an embodiment of the present invention.

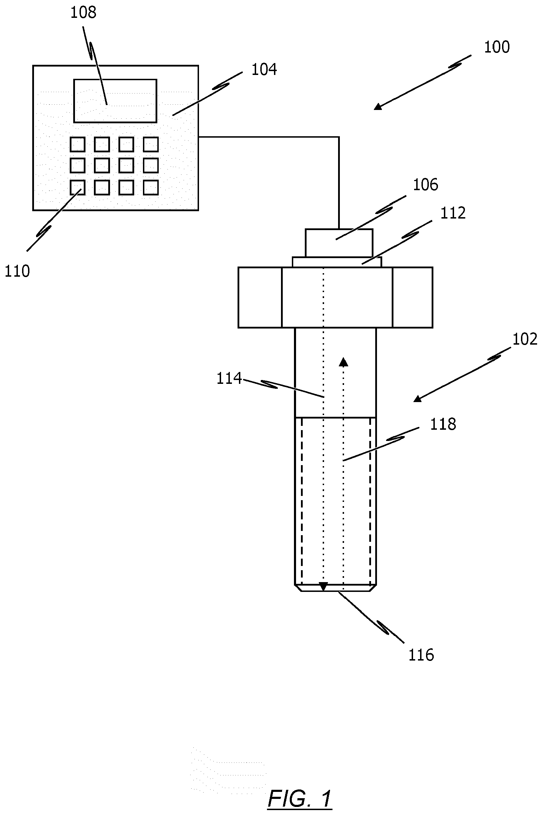

FIG. 1 is a schematic representation of an ultrasonic measurement device 100 used to determine the length of a bolt 102. The ultrasonic measurement device comprises a main unit 104 and a transducer 106. The transducer 106 is electrically connected to the main unit 104. The main unit 104 may comprise a memory, a processor, a user interface, including a display 108 and/or keys 110.

Of course, the interface may also be a touchscreen interface or a combination of those.

The transducer 106 is connected to the bolt 102 via a couplant 112. The couplant 112 facilitates propagation of ultrasonic signals produced by the transducer 106 into the material of the bolt 102.

The main unit 104 activates the transducer 106 to produce an ultrasonic signal, which is sent into the bolt 102 via the couplant 112. In the example shown in FIG. 1, the transducer 106 is a combined transducer/receiver, which is configured to generate an ultrasonic signal and, at the same time, receive the return signal. In this example, the return signal is a reflection of the ultrasonic signal generated by the transducer 106.

The ultrasonic signal (wave) is directed via the transducer 106 along the longitudinal axis of the bolt 102, i.e., in the direction of a primary propagation path 114. Once the ultrasonic wave reaches an end surface 116 of the bolt 102, the ultrasonic wave is reflected back towards the transducer 106, along return path 118.

The ultrasonic measurement device 100 is configured to determine the ultrasonic signal at the start of the propagation path and the reflected ultrasonic signal received by the transducer 106. The ultrasonic measurement device 100 may show one or both signals at display 108, to enable the operator to verify the quality of the measurements.

In some embodiments, the ultrasonic measurement device 100 may also be configured to determine the time of flight of the ultrasonic signal within the bolt 102, i.e., the time between generation of the ultrasonic signal and receipt of the return signal. As is well known in the art, the time of flight is a measure for the length of the bolt 102 in its longitudinal direction. In particular, the time of flight multiplied with the speed of sound within the bolt 102 provides the length of the bolt 102.

Calculating the time of flight requires calibration of the ultrasonic measurement device 100. In particular, the time of flight within the bolt 102 is slightly shorter than the duration between the production of the ultrasonic signal by the transducer 106 and the receipt of the return signal by the corresponding sensor. The difference between the measured duration and the real time of flight is dependent on various factors, which are generally known in the art. In order to compensate for such environmental influences, each ultrasonic measurement device 100 is calibrated before it is ready for use.

In order to calibrate the ultrasonic measurement device 100, an object of known length, e.g., a calibration rod, is measured with the ultrasonic measurement device. In one example, the calibration rod may have an exact length of 150 mm. If during calibration, the ultrasonic measurement device determines the length of the calibration rod to be more or less than 150 mm, the time measurement of the ultrasonic measurement device 100 will be set to a measurement origin, which ensures that the calculated length of the calibration rod is exactly 150 mm. As will be appreciated, the measurement origin of the ultrasonic measurement device 100 will typically be shifted to be later than the point in time, in which the ultrasonic signal is generated by the transducer 106, compensating for the time required to propagate through the couplant 112.

Over time, measurements of the ultrasonic measurement device may deteriorate, due to wear of one or more parts of the ultrasonic measurement device. As such, it is required to re-calibrate the ultrasonic measurement device on a regular basis. The present invention provides a method for re-calibrating ultrasonic measurement devices in a simple and effective manner. To this end, the present invention suggests using reference measurements of the reference object (e.g., the calibration rod) to determine if the measurement device is still calibrated appropriately at a later point in time. By contrast, prior-art methods suggest re-calibrating the measurement device 100 in the same manner as is done by the manufacturer during initial calibration, described above. By contrast, the present invention suggests recalibrating the ultrasonic measurement device only, if there is a large enough discrepancy between a reference measurement (e.g., the initial calibration measurement) and a verification measurement taken by the operator. Should a discrepancy be determined, the adjustment of the ultrasonic measurement device may be based on the difference between the two measurements (e.g., the two ultrasonic lengths measured during the reference measurement and the verification measurement).

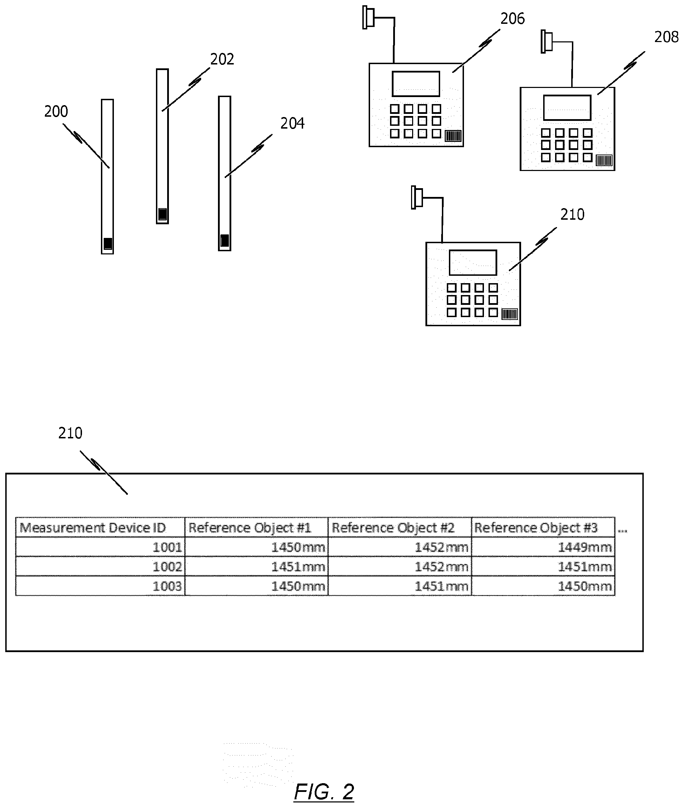

Turning to FIG. 2, there is shown a schematic representation of a set of reference objects (e.g., calibration rods) 200, 202, 204 and corresponding measurement devices 206, 208, 210. According to one aspect of the present disclosure, each of the reference objects 200, 202, 204 is measured via each of the ultrasonic measurement devices 206, 208, 210. The measurements of each of the reference objects 200, 202, 204 with each of the ultrasonic measurement devices 206, 208, 210 is stored in a database 212, which is also schematically represented in FIG. 2. In this example, nine measurements are entered into the database 210. To this end, each of the reference objects is labelled with a reference ID, whereas each of the ultrasonic measurement devices 206, 208, 210 is labelled with a corresponding device ID. The exemplary database 210 of FIG. 2 shows device IDs 1001, 1002, 1003, corresponding to the three ultrasonic measurement devices 206, 208, 210. The reference objects 200, 202, 204 are represented in database 210 as reference objects number 1, number 2, and number 3. Of course, any type of device ID/reference ID may be used.

The representation of database 210 also shows a reference measurement of each of the three reference objects 200, 202, 204 by the first ultrasonic measurement device 206 (device ID 1001) to be 1450 mm, 1452 mm, 1449 mm, respectively. The same reference objects 200, 202, 204 are measured at slightly different lengths by the remaining ultrasonic measurement devices 208, 210 as is derivable from the database 210 shown in FIG. 2.

In the above example of FIG. 2, the reference-measurement-data that is representative of the ultrasonic length of the reference object is thus the physical length of the reference object. However, it should be noted that the present application is not limited to reference-measurement-data, which includes the physical lengths. Rather, the reference-measurement-data that is stored within the database and linked to the corresponding ultrasonic measurement devices and reference objects may be any other type of data that is representative of the ultrasonic length of the reference object. In some embodiments, the reference-measurement-data may be a time of flight measurement, without any conversion into a physical length by means of the speed of sound. In another embodiment, the reference-measurement-data may be in a form of an ultrasonic signal determined during the reference measurement, as will be described in more detail below. In this later case, the reference-measurement-data is not a single parameter but a wave function, which is stored within the database and linked to the corresponding measurement device and reference object.

FIG. 2 also indicates that each of the reference objects 200, 202, 204 and each of the ultrasonic measurement devices 206, 208, 210 is provided with an optical (barcode or QR code) or electronic (RFID code) tag, which may be scanned by the operator before or after a verification measurement to help retrieve the reference-measurement-data stored within database 210 for comparison purposes, as will be described in more detail below.

Still referring to FIG. 2, in some examples, one ultrasonic measurement device (e.g. 206) may be considered a master measurement device. In some embodiments, a reference-measurement-data may exclusively be recorded via the master measurement device. Each subsequent verification measurement conducted by other ultrasonic measurement devices (e.g. 208, 210) may result in a deviation from the master measurement, as is suggested by the exemplary database 210 of FIG. 2. It follows that a correction in the system needs to be performed, following the above correction factor.

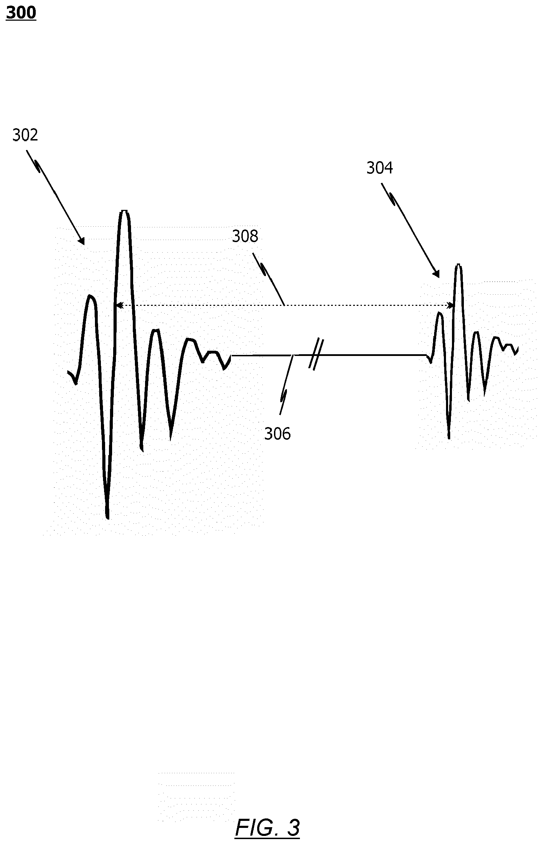

FIG. 3 shows a schematic representation of an ultrasonic signal recorded by an ultrasonic measurement device during the reference or the verification measurement. At the beginning of the measurement, an ultrasonic pulse 302 is generated by the transducer of the ultrasonic measurement device and sent to the reference object. The ultrasonic pulse 302 is generated at a first point in time.

FIG. 3 shows a second pulse 304, which has a substantially identical waveform to the first pulse 302. The second pulse 304 represents the return signal received by the sensor of the ultrasonic measurement device. During propagation of the pulse wave through the reference object, the amplitude of the ultrasonic signal decays.

Accordingly, the amplitude of the second pulse 304 of the return signal is lower than the amplitude of the initial pulse 302.

FIG. 3 further schematically shows a duration 306 of the measurement, during which no ultrasonic signal is received by the sensor. As will be appreciated, this is a simplification of the real world signal, and there will typically be background noise at all times. However, the time duration 306 relates to a time during which no significant ultrasound signals are received.

Once the return signal is received, the ultrasonic measurement device may determine the time of flight. The time of flight determined by the ultrasonic measurement device may be the duration of time between "0" to the first corresponding peak or two corresponding peaks of the pulse waveforms 302, 304. In the exemplary representation of FIG. 3, the time of flight 308 is determined as the duration between the second positive half waves of the corresponding pulse 302, 304.

As mentioned previously, both the reference-measurement-data and the verification-measurement-data may comprise the time of flight 308, an ultrasonic length determined by multiplying the time of flight 308 with the speed of sound, and/or a representation of the waveform (e.g., the wave form 300 in FIG. 3) detected by the ultrasonic measurement device.

The present invention suggests comparing reference measurements and verification measurements taken of the same reference object with the same, or another, ultrasonic measurement device at different points in time. The reference measurement may be taken by the manufacturer, whereas the verification measurement may be taken by the operator immediately before use and/or at predefined intervals. Based on a potential difference between the reference measurement and the verification measurement, the ultrasonic measurement device may be adjusted/re-calibrated to compensate for any measurement errors due to wear of the measurement device.

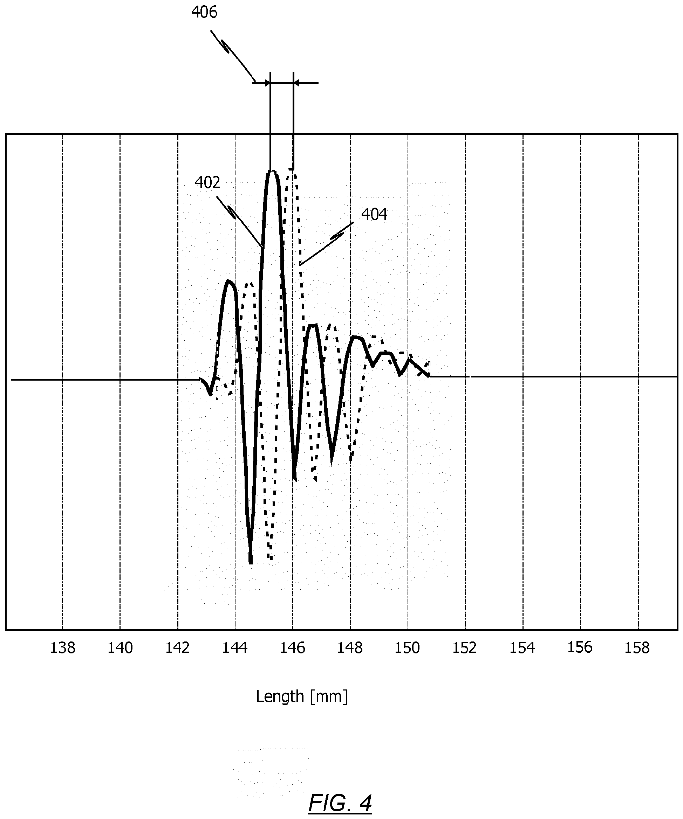

FIG. 4 shows a schematic representation of a comparison between reference measurement and a verification measurement. In the embodiment of FIG. 4, the diagram shows two different return signals 402, 404. A first return signal 402 shown in solid lines is representative of the ultrasonic length measured during the reference measurement. In other words, the return signal 402 is a waveform that is stored within the database (compare FIG. 2) as reference-measurement-data linked to one specific reference object and one particular measurement device. In other words, the return signal 402 was measured during initial calibration of the reference object by the manufacturer. The corresponding return signal was then stored, e.g., within the database 212, and linked to the corresponding reference object (object ID) and measurement device (device ID).

The return signal 404 shown in dashed lines, represents a verification measurement taken by the operator (e.g., in the field) at a later point in time. However, it should be noted that the second return signal 404 was determined for the same reference object as the first return signal 402. In some embodiments, the second return signal 404 is determined by the same ultrasonic measurement device as the first return signal 402. In alternative embodiments, the second return signal 404 is determined by a different ultrasonic measurement device than the first return signal 402. The second return signal 404 represents the verification-measurement-data obtained during the verification measurement.

A comparison of the two return signals 402, 404 shows a difference in the ultrasonic length of the same reference object determined by the ultrasonic measurement device(s). In the example of FIG. 4, the second peak of the return signal 402 of the reference-measurement-data, for example, is located at a length of approximately 145 mm. By contrast, the second peak of the return signal 404 according to the verification-measurement-data is located approximately around 146 mm. In other words, the difference of the measurements of the reference object between the two return signals 402, 404 is approximately 1 mm. A processor may compare this difference 406 against a calibration threshold to determine if re-calibration of the measurement device is required. In some embodiments, the calibration threshold may be 0.02 mm. Applied to the example of FIG. 4, the processor would determine that re-calibration is required, because the difference 406 exceeds the calibration threshold. Of course, it will be appreciated that the calibration threshold may be adjusted to any suitable value.

Verification measurements may be taken on a regular basis. For example, a processor may prompt the operator on a regular basis, i.e., after a predetermined amount of time following the last calibration, to initiate a verification measurement. In this way, appropriate calibration of the measurement device is ensured on a regular basis. Alternatively, the operator may take a verification measurement every time the ultrasonic measurement device is used to determine the length of a bolted connection. The verification measurement itself is not a re-calibration of the ultrasonic measurement device. Rather, the verification measurement serves to ensure that the ultrasonic measurement device is still appropriately calibrated and thus returns correct measurement results, i.e., within acceptable tolerances.

It should also be noted that the reference-measurement-data and the verification-measurement-data of the present invention is not restricted to the waveforms of the return signals 402, 404 shown in FIG. 4. As mentioned above, any type of data that is representative of the ultrasonic length of the reference object may be used as part of the reference-measurement-data and the verification-measurement-data respectively. For example, the reference-measurement-data and the verification-measurement-data may include the time of flight measurements and/or ultrasonic lengths determined on the basis of such time of flight measurements.

If the processor determines that re-calibration of the ultrasonic measurement device is required, the processor may inform the operator. The operator may then decide to initiate re-calibration manually. Alternatively, the processor may automatically re-calibrate the measurement device, if it determines that re-calibration is required.

If the processor determines, on the basis of the comparison between the reference-measurement-data and the verification-measurement-data, that a re-calibration of the ultrasonic measurement device is required, the processor may adjust the ultrasonic measurement device on the basis of the difference 406 between the reference measurement and the verification measurement.

It should be noted that when performing the subsequent measurements/verification measurements, it is not raw ultrasonic data, which is compared to the reference-measurement-data. Temperature compensation and potential stress factors are included, which are dependent on the properties of the material of which the reference rods are manufactured.

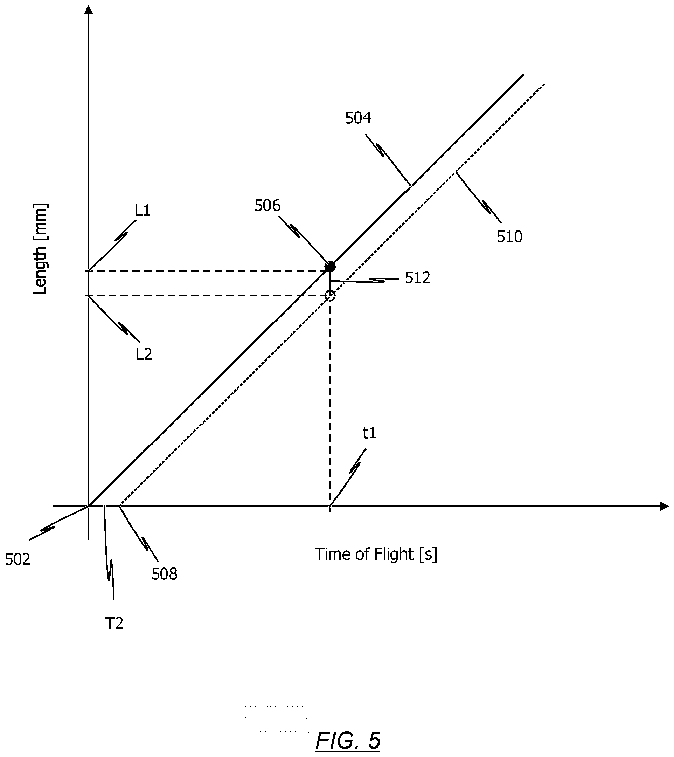

FIG. 5 shows an example of an adjustment to the measurement device on the basis of the difference 406 determined previously. In particular, the adjustment shown in FIG. 5 relates to a shift in the measurement origin of the ultrasonic measurement device. As discussed herein before, during initial calibration of the ultrasonic measurement device, a pre-set measurement origin is determined. This pre-set measurement origin is determined by the manufacturer of the ultrasonic measurement device and shown in FIG. 5 with reference 502. A function 504 extending from the pre-set measurement origin 502 represents the relationship between the time of flight of the ultrasonic signal within the bolt to be measured and the corresponding ultrasonic length. As is well known in the art, the ultrasonic length is directly proportional to the time of flight and the gradient of the function 504 is dependent on the speed of sound within the object to be measured. The characteristics of function 504 may be verified/calibrated on a yearly basis using another calibration procedure. Yet, for simplicity, in this disclosure, it is assumed constant.

One may considered a scenario in which the pre-set origin 502 and the function 504 relate to the ultrasonic measurement device used for the reference measurement and the verification measurement shown in FIG. 4. According to the measurements shown in FIG. 4, the difference between the reference measurement and the verification measurement exceeds the calibration threshold, such that the measurement device should be recalibrated (i.e., adjusted) to compensate for the variance between the reference-measurement-data and the verification-measurement-data. Say, for example, during the verification measurement, the ultrasonic measurement device determined a time of flight of the ultrasonic signal within the reference object of t1. Using the pre-set measurement origin 502, such a time of flight of t1 would correspond to an ultrasonic length L1 of the reference object. However, as is derivable from FIG. 4, the ultrasonic length L1 is not accurate, since it differs from an ultrasonic length determined during the reference measurement. In particular, in the example of FIG. 4, the ultrasonic length L1 of the verification measurement is 1 mm longer than the ultrasonic length determined on the basis of the reference measurement. FIG. 5 shows an adjustment of the ultrasonic measurement device to compensate for such a scenario (measured ultrasonic length is too large). In this scenario, the pre-set measurement origin 502 of the ultrasonic measurement device is shifted in a positive direction along the time of flight axis. The pre-set measurement origin 502 may be shifted by a time shift T2. The new measurement origin is shown by reference 508 in FIG. 5. A corresponding, dashed line shows the function 510 between the time of flight and the length. The function 510 is shown in dashed lines and runs in parallel to the function 504, before the re-calibration/adjustment of the ultrasonic measurement device. As mentioned previously, the gradient of the function 510 does not change as compared to the function 504, since the speed of sound within the reference object is a constant. Due to the time shift T2, the time of flight t1 measured by the ultrasonic measurement device now corresponds to an ultrasonic length L2, which is lower than the ultrasonic length L2 measured before the adjustment/re-calibration. In one example, the difference 512 between the ultrasonic length L1 before the re-calibration and the ultrasonic length L2 after the re-calibration is equal to the length difference 406 determined during the verification step shown in FIG. 4. To this end, a processor may be configured to multiply the length difference 406 determined during the verification with a constant factor to determine the time shift T2. In some embodiments, the correction factor may be representative of the speed of sound within the reference object.

As will be appreciated, an adjustment of the measurement origin between origins 502 and 508 shown in FIG. 5 will lead to a shift of the waveform of the return signal 404 of the verification measurement in FIG. 4 to the left, such that the return signals 402, 404 of FIG. 4 are then substantially identical with each other.

Once re-calibration is completed (i.e., the measurement origin is shifted appropriately), another verification measurement may be taken either automatically or triggered by the operator. The processor may compare the new verification measurement with the reference-measurement-data to determine if the difference shown in FIG. 4 has been compensated or that any potential remaining difference is below the calibration threshold. If the difference between the reference-measurement-data and the new verification-measurement-data taken after calibration is below the calibration threshold, the re-calibration process is finished and the processor may log the date and/or time of the re-calibration. By contrast, if a difference between the reference-measurement-data and the new verification-measurement-data still exceeds the calibration threshold, the processor may once again adjust/recalibrate the ultrasonic measurement device. This process may be repeated by the processor until the verification-measurement-data no longer significantly differs from the original reference-measurement-data.

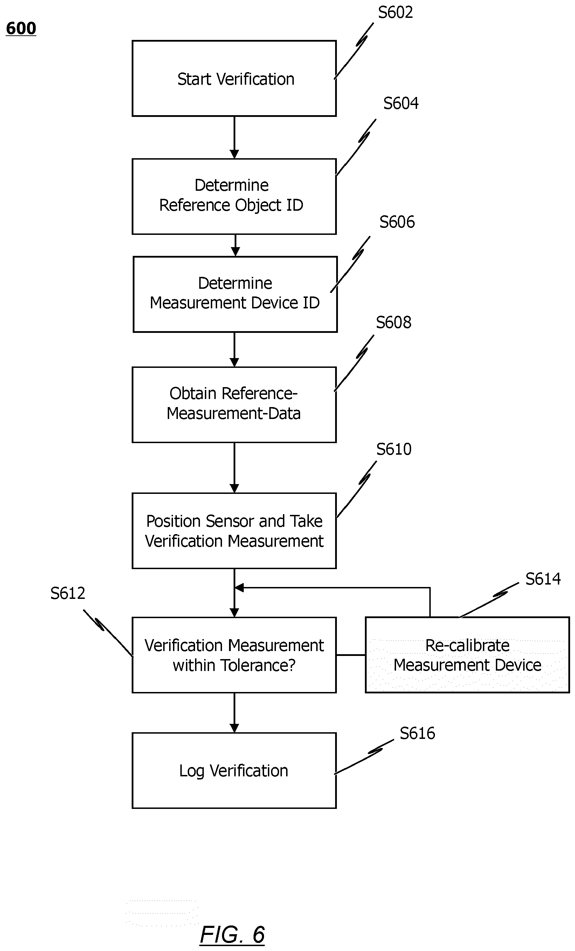

Turning to FIG. 6, there is shown a schematic flowchart of a method for re-calibrating an ultrasonic measurement device. The method 600 starts with step S602, in which a verification measurement process is started. For example, the operator may choose to verify the calibration of the ultrasonic measurement device before any measurement of a bolted joint is initiated. Alternatively, the ultrasonic measurement device may prompt the operator to initiate a verification measurement at regular time intervals, e.g., on the basis of a time elapsed since the last verification measurement. To this end, the processor may use the time stamp after re-calibration mentioned with reference to FIG. 5.

In a second step S604, the reference object ID of the reference object used for the verification measurement is determined. As will be appreciated, there may be multiple ways of determining the reference object ID. Some examples include barcodes, QR codes, RFID tags or simply IDs printed onto the reference object. The user may be prompted by the ultrasonic measurement device (i.e., by the processor) to provide the reference ID of the reference object. To this end, the user may scan a corresponding barcode or QR code by means of the ultrasonic measurement device. Alternatively, the ultrasonic measurement device may automatically communicate with the reference object, e.g., via an RFID tag to automatically determine the reference ID once the verification process is started.

In a second step S606, the measurement device ID is determined. Similar to the determination of the reference object ID, the device ID of the ultrasonic measurement device may either be scanned or entered by the user or automatically determined by the processor. As mentioned above, the measurement device ID may be stored within a memory of the ultrasonic measurement device, such that the processor may look-up the measurement device ID at any point. It will be appreciated that steps S604 and S606 may be performed in any order or simultaneously.

In another step S608, the processor will obtain the reference-measurement-data stored during the original calibration of the ultrasonic measurement device. The reference-measurement-data may be stored in a local or remote database and linked to the specific reference object and measurement device used during the original calibration. The processor may thus retrieve the reference-measurement-data from the database by looking-up the object ID and the device ID determined in steps S604, S606.

In another step S610, the user positions the sensor and starts a verification measurement. In some embodiments, the processor of the ultrasonic measurement device may prompt the user to position the sensor, once the reference object ID and the measurement device ID have been determined. The ultrasonic measurement device may guide the user through positioning the sensor correctly on the reference object to be measured during the verification measurement. Once the sensor is positioned, the user may trigger the verification measurement, e.g., by pressing a corresponding button on the ultrasonic measurement device.

The ultrasonic measurement device will then proceed to take an ultrasonic length measurement of the reference object to obtain verification-measurement-data, which may be compared to the stored reference-measurement-data in a step S612. If during step S612, the comparison between the verification-measurement-data and the reference-measurement-data (see also FIG. 4) suggests that the ultrasonic length determined on the basis of the verification-measurement-data is within the calibration tolerance of the ultrasonic length according to the reference-measurement-data, the processor will determine that no re-calibration is required and inform the user that the ultrasonic measurement device is accurately calibrated.

If, however, the verification measurement is not within the calibration tolerance during step S612, the processor will either automatically initiate a re-calibration step S614 or inform the user that re-calibration appears to be required. The user may then manually activate the re-calibration step S614. Once the re-calibration step S614 is initiated, the processor may adjust the ultrasonic measurement device to compensate for the variance between the reference measurement and verification measurement (see for example FIG. 5 above).

Once the re-calibration step S614 is completed, the processor may once again take a verification measurement (the ultrasonic transducer/sensor should still be in place) and determine if the verification measurement is now within the tolerances. If the variance has been corrected by the re-calibration step S614, the processor may once again inform the user that the ultrasonic measurement device is now appropriately calibrated and may be used for measurement of bolted joints.

In an optional step S616, the processor may log the verification and, if appropriate, the re-calibration process with a timestamp. The operator or the manufacturer may thus always look-up when the calibration of the ultrasonic measurement device was last verified/when the last re-calibration was conducted.

## Claims

1. A method of calibrating an ultrasonic measurement device, particularly an ultrasonic bolt testing device, comprising the following steps:
a) providing a reference object;
b) measuring the reference object via an ultrasonic measurement device to determine reference-measurement-data representative of the ultrasonic length of the reference object;
c) storing the reference-measurement-data;
d) measuring the reference object with the same, or another, ultrasonic measurement device to determine verification-measurement-data representative of the ultrasonic length of the reference object;
e) comparing a reference length of the reference object determined on the basis of the reference-measurement-data to a verification length of the reference object determined on the basis of the verification-measurement-data;
f) adjusting the ultrasonic measurement device on the basis of a comparison result between the reference-measurement-data and the verification-measurement-data.

2. The method of claim 1,
comprising assigning a reference ID to the reference object and a device ID to the measurement device and storing the reference-measurement-data together with the corresponding reference ID and device in a database, preferably in a memory of the measurement device.

3. The method of claim 1 or 2,
wherein step e) comprises:
e1) determining a reference ID of the reference object;
e2) determining a device ID of the measurement device;
e3) determining the reference length on the basis of reference-measurement-data corresponding to the combination of reference ID and device ID.

4. The method of any one of claims 1 to 3,
wherein a single reference object is used for all verification measurements, irrespective of the size of a bolted connection to be checked via the ultrasonic measurement device.

5. The method of any one of claims 1 to 4,
wherein measuring the reference object comprises determining a time of flight of an ultrasound signal between a pre-set measurement origin and a point in time when an ultrasound return signal is received.

6. The method of claim 5,
wherein adjusting the ultrasonic measurement device comprises shifting the measurement origin on the basis of the comparison result between the reference-measurement-data and the verification-measurement-data.

7. The method of claim 6,
wherein the measurement origin is shifted on the basis of a difference in length determined on the basis of the comparison result multiplied by a constant correction factor.

8. The method of any one of claims 1 to 7,
wherein comparing the lengths comprises determining a length difference between the length determined on the basis of the reference-measurement-data and the length of the reference object determined on the basis of the calibration-measurement-data,
wherein the method comprises comparing the length difference to a calibration threshold.

9. The method of claim 8,
comprising adjusting the ultrasonic device only if the length difference exceeds the calibration threshold.

10. The method of claim 8 or 9,
comprising repeating steps d) to f) until a the length difference is below the calibration threshold.

11. The method of any one of claims 8 to 10,
Wherein the calibration threshold is between ±0.00mm and ±0.02mm.

12. The method of any one of claims 1 to 11, wherein the reference-measurement-data comprises any one or more of:
- a waveform of ultrasonic signal determined during the reference measurement;
- a length of the reference object determined during the reference measurement;
- a time of flight of the ultrasound signal during the reference measurement.

13. The method of any one of claims 1 to 12, wherein the verification-measurement-data comprises any one or more of:
- a waveform of ultrasonic signal determined during the verification measurement;
- a length of the reference object determined during the verification measurement;
- a time of flight of the ultrasound signal during the verification measurement.

14. The method of claim 1 to 13, comprising logging when the ultrasonic measurement device was last verified and/or calibrated.

15. An ultrasonic measurement device for determining an ultrasonic length of an object, preferably a bolt, comprising:
- an ultrasonic transducer;
- an ultrasonic receiver;
- a memory for storing measurement data;
- a controller configured to:
a) receive reference-measurement-data representative of the ultrasonic length of the reference object recorded during a first measurement of the reference object;
b) store the reference-measurement-data in the memory;
c) receive verification-measurement-data representative of the ultrasonic length of the reference object recorded during a later, second measurement of the reference object;
d) comparing a reference length of the reference object determined on the basis of the reference-measurement-data to a verification length of the reference object determined on the basis of the verification-measurement-data;
e) adjust the ultrasonic measurement device on the basis of a comparison result between the reference-measurement-data and the verification-measurement-data.
